(19) Europäisches Patentamt
European Patent Office
Office européen des brevets

(11) Publication number: **0 067 582**
**A2**

# (12) EUROPEAN PATENT APPLICATION

(21) Application number: 82302735.4

(22) Date of filing: 27.05.82

(51) Int. Cl.$^3$: C 22 B 60/02
B 01 D 11/04

(30) Priority: 15.06.81 US 273737

(43) Date of publication of application:
22.12.82 Bulletin 82/51

(84) Designated Contracting States:
BE DE FR GB IT

(71) Applicant: Exxon Research and Engineering Company
P.O.Box 390 180 Park Avenue
Florham Park New Jersey 07932(US)

(72) Inventor: Valint, Paul Louis, Jr.
793 Bryant Street
Rahway New Jersey(US)

(74) Representative: Field, Roger Norton et al,
ESSO Engineering (Europe) Ltd. Patents & Licences
Apex Tower High Street
New Malden Surrey KT3 4DJ(GB)

## (54) An improved liquid membrane process for uranium recovery.

(57) A liquid membrane emulsion extraction process for recovering uranium from a WPPA feed solution containing uranyl cations wherein said feed is contacted with a water-in-oil emulsion which extracts and captures the uranium in the interior aqueous phase thereof, there being an alkane diphosphonic acid uranium complexing agent in the interior phase of the emulsion.

EP 0 067 582 A2

AN IMPROVED LIQUID MEMBRANE PROCESS FOR URANIUM RECOVERY

Recovering uranium as a by-product from Wet Process Phosphoric Acid is well-known in the art. Phosphate rock is mined primarily to produce a high-phosphate containing fertilizer, the first step of which involves digesting the rock in sulfuric acid to produce a phosphoric acid solution which is known in the art as Wet Process Phosphoric Acid (WPPA). The WPPA contains uranium which can be recovered before the acid is further processed for making fertilizer. This uranium is present in the acid primarily as $UO^{2+}$ cations referred to in the art as uranyl ions, wherein the uranium is in the hexavalent, +6 state. In known processes for recovering uranium from WPPA, the uranium is extracted from the WPPA by contacting the WPPA with an extractant which is an oily, water-immiscible material consisting of a mixture of di(2-ethylhexyl) phosphoric acid (D2EHPA) and trioctylphosphine oxide (TOPO) dissolved in an oily, organic liquid such as kerosene. The amount of uranium that the oily extractant can contain is limited by equilibrium conditions. This is quite low and is generally less than one gram of uranium per liter of extractant. The uranium enriched extractant is then separated from the WPPA and contacted with an aqueous solution containing a reducing agent, such as ferrous ions, in an acid such as phosphoric acid, to convert the uranium to tetravalent U(IV) ions. The U(IV) ions are relatively insoluble in and are not reextracted by the D2EHPA/TOPO-containing oil. This step results in stripping the uranium from the oily extractant into the aqueous reducing solution and the aqueous reducing solution is then further processed to recover the uranium. Thus, at least two different extraction operations are required. Typical of the prior art which teaches the recovery of uranium from WPPA by first contacting the acid with an oily extractant con-

BAD ORIGINAL

taining D2EHPA/TOPO, separating the uranium-enriched extractant from the uranium-reduced feed and then stripping the uranium from the uranium-enriched extractant with an aqueous reducing solution of ferrous ions in phosphoric acid are U.S. Patents 3,711,591 and 3,737,513.

Unfortunately, this well-known and commercially practised process for recovering uranium from WPPA suffers from many disadvantages, among which is a relatively low extraction efficiency ranging from about 1 to about 7. Extraction efficiency is defined as the ratio of the uranium concentration in the oily extractant to the uranium concentration remaining in the WPPA feed at extraction equilibrium conditions. Low extraction efficiency means that large quantities of expensive D2EHPA/TOPO extractant must be used and circulated with high concomitant losses of expensive reagents. Additionally, large, expensive contacting vessels and settling tanks and pumps are required to handle large amounts of oily extractant. Another drawback of this process is due to the fact that as the temperature increases, the extraction efficiency decreases. For example, a report issued by the Oak Ridge National Laboratories (cf. Solvent Extraction of Uranium from Wet Process Phosphoric Acid, F. J. Hurst, D. J. Crouse, and K. B. Brown, Report from Oak Ridge National Laboratory, April, 1969) disclosed that the extraction efficiency decreased from about 7 to about 1 when the extraction temperature increased only from about 20°C to 60°C when uranium was extracted from WPPA using a solution of 0.2M D2EHPA and 0.05M TOPO in kerosene as the extractant. At a temperature of 40°C the extraction efficiency was 2. As a consequence, commercial processes must either operate at a temperature no higher than about 40°C or include more extraction stages to maintain a higher efficiency at the higher temperatures. The WPPA is commercially produced at a temperature of about 60°C, which means that the acid must be cooled down to about 40°C before being extracted or additional

BAD ORIGINAL

extraction stages must be used to maintain satisfactory extraction efficiency at the higher temperature. This naturally necessitates additional equipment and the use of considerable amounts of energy to cool the WPPA down to an economically viable extraction temperature.

It has recently been found that a liquid membrane emulsion process for recovering uranium from WPPA which overcomes many disadvantages of the prior art processes, because the extraction efficiencies are relatively high-ranging from about 30 to 400 compared to 2-3 of the prior art processes. Further, the WPPA does not have to be cooled down before it is contacted with the emulsion. This process comprises contacting a uranium containing WPPA feed with globules of a water-in-oil emulsion comprising microdroplets of an aqueous interior phase dispersed in an oily, continuous exterior phase containing at least one transfer agent for selectively transferring the uranium from the feed into the interior phase of the emulsion wherein the valence of the uranium species is changed, thereby trapping the uranium in the emulsion. The uranium-enriched emulsion is then separated from the feed, the emulsion is broken and the uranium is recovered.

In a preferred embodiment of this process, the uranium is present in the WPPA feed as uranyl ion, the exterior phase contains a mixture of D2EHPA and TOPO as selective transfer agents for the uranyl ion and the interior phase of the emulsion contains a reducing agent which changes the uranyl to U(IV) ions, thereby trapping the uranium in the interior phase of the emulsion.

It has now been discovered that a liquid membrane emulsion uranium extraction process is improved if the internal, aqueous phase of the emulsion contains an alkane disphosphonic acid uranium complexing agent. Thus the present invention is a process for recovering uranium from an aqueous feed solution containing uranyl cations wherein said process comprises the steps of:

ORIGINAL

(a) contacting said feed with a water-in-oil emulsion comprising (i) an aqueous interior phase containing a uranium complexing agent comprising an alkane diphosphonic acid dispersed in (ii) an oily, surfactant-containing exterior phase immiscible with both the interior phase and said feed, said interior phase also containing an acid solution and a reducing agent and said exterior phase containing at least one transfer agent to transport only the uranyl cations from said feed into the interior phase of the emulsion wherein said reducing agent changes the uranyl cations to tetravalent U(IV) cations which form a complex with said complexing agent whereby said uranium is trapped in said interior phase to form a uranium-rich emulsion and a uranium-reduced feed solution;

(b) separating the uranium-rich emulsion from the feed solution; and

(c) recovering uranium from the emulsion.

The alkane diphosphonic acid complexing agent will preferably have the formula:

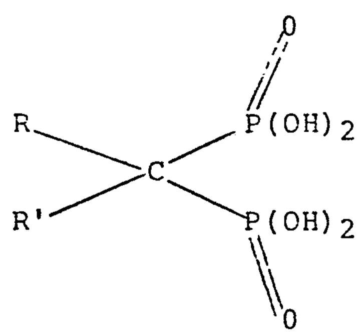

wherein R is hydrogen or a 1 to 4 carbon atom alkyl group and R' is hydrogen or hydroxyl. A particularly preferred uranium complexing agent is ethane-1-hydroxy-1, 1-diphosphonic acid (EHDP) wherein R is a methyl group and R' is hydroxyl. The amount of complexing agent present in the internal phase of the emulsion will range from about 0.1 - 1.0M, preferably 0.1 - 0.5M and still more preferably from about 0.1 - 0.3M.

The process of this invention is suitable for use at temperatures ranging from about 20°C to 100°C.

BAD ORIGINAL

A more preferred temperature range for extracting uranium from WPPA is from about 40 to 85°C. The higher the temperature the more efficient is the extraction of the uranium from the feed, the temperature being limited only by the stability of the emulsion.

In a preferred embodiment of this invention the feed will be WPPA containing $UO_2^{2+}$ (uranyl) cations wherein the uranium is in the hexavalent state, the interior phase of the emulsion will be a phosphoric acid solution containing ferrous ions and EHDP and the exterior phase of the emulsion will be a mixture of D2EHPA/TOPO in an aliphatic hydrocarbon which also contains a surfactant for forming and stabilizing the emulsion. The D2EHPA/TOPO in the exterior phase transports the $UO_2^{2+}$ cations from the WPPA feed into the interior phase of the emulsion wherein the uranium is stripped from the D2EHPA/TOPO by the phosphoric acid and reduced to U(IV) ions by the ferrous ions and is thereby trapped in the emulsion, because the U(IV) cations are not reextracted by the D2EHPA/TOPO.

Essential to the successful operation of the process of this invention is a suitable water-in-oil type of emulsion. It has been discovered that emulsions of the type disclosed in U.S. 3,779,907 are suitable for use in the process of this invention. These emulsions are referred to by those knowledgeable in the art as liquid membrane emulsions. Thus, the water immiscible exterior phase will comprise one or more surfactants dissolved in an oily, hydrophobic liquid immiscible with water and having dissolved therein one or more agents for transferring the uranium through the exterior phase. The oily liquid must, of course, be capable of dissolving both the surfactant and the transfer agent or agents and may be any liquid which is non-reactive and immiscible with both the interior and exterior phases. It is preferred that this liquid comprise one or more aliphatic hydrocarbons and it

BAD ORIGINAL

is particularly preferred that the liquid have a flash point above the operating temperature of the process. Illustrative, but nonlimiting examples of suitable liquids include substantially aliphatic hydrocarbons such as kerosene and paraffinic hydrocarbons such as Norpar 13, SK-100, Low Odor Paraffin Solvent (LOPS) and Solvent Neutral 100 (S-100N) which are available from Exxon Chemical Company. It is understood, of course, that the hydrocarbon may contain one or more components selected from other hydrocarbons, halogenated hydrocarbons, higher oxygenated compounds such as alcohols, ketones, acids and esters as long as the emulsion is stable and the exterior phase is immiscible with both the aqueous feed solution and aqueous interior phase and permits transferring the uranium from the feed to the interior phase to the emulsion. The exterior phase of the emulsion will contain from about 60-97 weight % of this hydrocarbon liquid, preferably from about 75-95% and most preferably from about 85-95 weight %.

As hereinbefore stated, the oily, water immiscible external phase of the emulsion will contain one or more oil soluble surfactants for forming and stabilizing the emulsion, but which will not prohibit transfer of the uranium through the exterior phase to the interior phase. Suitable surfactants may be selected from among oil soluble anionic, cationic, and nonionic surfactants. Surfactants that have been found to be particularly suitable for use in the process of this invention include various derivatives of polyisobutylene succinic anhydride (PIBSA) which includes, but is not limited to various polyamine derivatives thereof having the general formula:

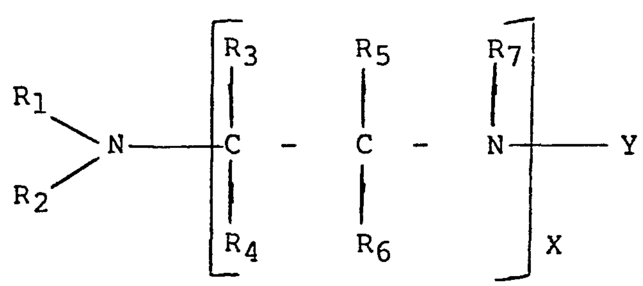

BAD ORIGINAL

wherein $R_1$, $R_2$, $R_3$, $R_4$, $R_5$, $R_6$, $R_7$ and Y are chosen from hydrogen, $C_1$ to $C_{20}$ alkyl, $C_6$ to $C_{20}$ aryl, $C_7$ to $C_{20}$ alky-aryl radicals and substituted derivatives thereof; and x is an integer of from 1 to 100. $R_3$, $R_4$, $R_5$, $R_6$ and $R_7$ are preferably hydrogen with x varying from 3 to 20. The substituted derivatives are preferably selected from oxygen, nitrogen, sulfur, phosphorus and halogen-containing derivatives. Various PIBSA-polyamine compounds that have been found useful in the practice of this invention include those taught in U.S. Patent No. 3,172,892,

A particular PIBSA polyamine derivative surfactant that has been found to be useful in the process of this invention is one wherein $R_1$ and $R_2$ taken together to form an alkyl succinic radical and wherein the surfactant is a compound having the general formula:

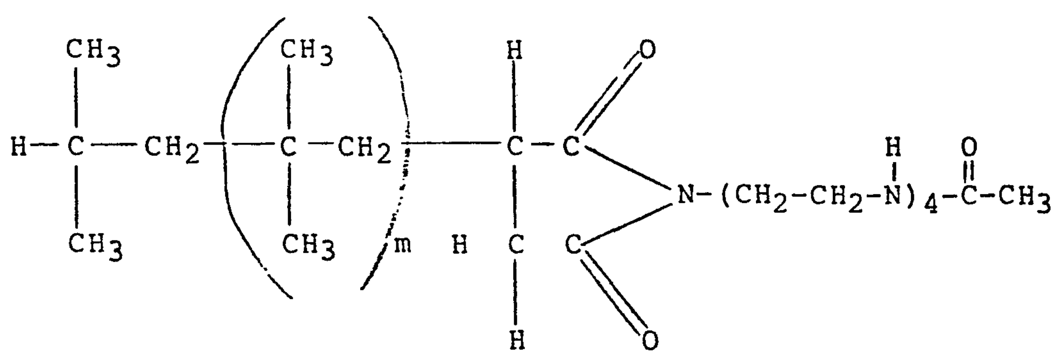

wherein m is an integer generally ranging of about 10-60 and more preferably 40, thereby giving said preferred polyamine derivative a molecular weight % of about 2000. This surfactant will generally comprise from about 0.2 to 10 weight % of the exterior phase of the emulsion, preferably from about 0.5 to 5 weight % and still more preferably from about 1-3 weight %.

As hereinbefore stated, the external phase of the emulsion must contain an agent capable of transferring the uranium from the aqueous feed, through the oily external phase to the interior phase. Transfer agents found suitable for transferring cationic uranium

BAD ORIGINAL

species containing hexavalent uranium (i.e. $UO_2^{2+}$) through the external phase to the internal phase include a mixture of oil soluble dialkyl esters of phosphoric acid and trialkylphosphine oxides. In particular, a mixture of di(2-ethylhexyl) phosphoric acid (D2EHPA) and trioxtyl-phosphine oxide (TOPO) are preferred for transporting uranyl ($UO_2^{2+}$) ions through the external phase of the emulsion. This mixture will not effectively transfer uranium species wherein uranium exists in the tetravalent U(IV) state. In general, the transfer agent will comprise from between about 1-30 wt. % of the exterior phase of the emulsion, preferably from about 2-18 wt. % and most preferably from about 2-6 wt. %. When the transfer agent comprises a combination of D2EHPA and TOPO they will be in said exterior phase in a molar ratio ranging from about 1/1 to 10/1, preferably from 2/1 to 8/1 and, more preferably from about 2/1 to 7/1 of D2EHPA/TOPO.

As hereinbefore stated, the aqueous interior phase of the emulsion will comprise an aqueous acid solution containing an alkane diphosphonic acid complexing agent of the general formula:

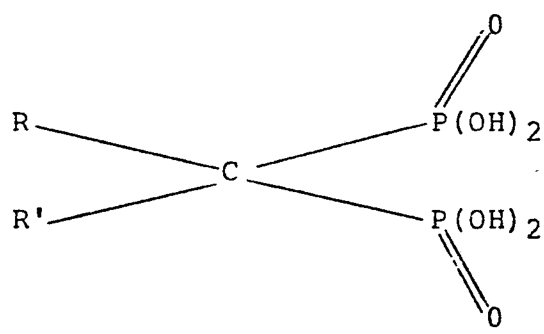

wherein R is hydrogen or a 1 to 4 carbon atom alkyl and R' is hydrogen or hydroxyl. The interior phase will also contain a reducing agent for reducing the uranyl ion to U(IV) ion in said interior phase. There should be enough reducing agent present in the internal phase to reduce the uranium ion transported therein. Illustrative, but non-limiting examples of suitable reducing agents include acid solutions of ferrous or chromous ions such as

BAD ORIGINAL

an aqueous solution of ferrous sulfate in phosphoric acid wherein the concentration of the ferrous ion ranges from about 8-50 grams per liter, preferably from 10 to 40g/liter and wherein the concentration of the phosphoric acid ranges from about 3-12 moles/liter and more preferably from about 5-8 moles/liter. The following reaction is believed to occur when reducing ($UO_2^{2+}$) with acidic ferrous ion:

$$2Fe^{2+} + UO_2^{2+} + 4H^{+} \text{----} 2Fe^{3+} + U^{4+} + 2H_2O$$

It is important that the concentration of phosphoric acid in the internal phase be approximately the same as in the feed in order to avoid excessive swelling and ultimately destruction of the emulsion.

The interior phase will comprise from about 15-80 volume percent of the emulsion, preferably from 30-70 and most preferably from 33-60 volume percent, i.e., the volume ratio of the oily exterior or membrane phase to the aqueous interior phase of the emulsion will range from about 6/1 to 1/4, more preferably from about 2/1 to 1/2, and still more preferably from about 2/1 to 1/1.

The emulsions used in this invention may be prepared by any of the well known methods. Thus, a solution comprising the components of the oily exterior phase is mixed with an aqueous solution which will form the interior phase under high shear conditions attained by the use of high speed stirrers, colloid mills, homogenizers, ultrasonic generators, mixing jets, etc.

In a preferred embodiment of this invention, WPPA feed at a temperature of about 60°C containing uranyl ($UO_2^{2+}$) cations is contacted with a water-in-oil emulsuion having an interior phase comprising an aqueous solution of 0.2M/l of EHDP and from about 14 to 40g/liter of ferrous ion in 5 to 6 molar phosphoric acid surrounded by an exterior phase comprising a solution of D2EHPA/TOPO in Solvent Neutral 100 containing a PIBSA-polyamine surfactant. The volume ratio of the WPPA feed to the emulsion will generally range between about 1/1 to 40/1 and more

BAD ORIGINAL

preferably between about 3/1 to 20/1. The actual ratio will, of course, depend on the concentrations of the uranium in the feed and the final uranium concentration desired in the internal phase. For a typical Florida Black Acid containing 0.17 grams per liter of uranium, a suitable ratio will be about 12/1 with a membrane to internal phase ratio of 2/1. The WPPA may be contacted with the emulsion either, concurrently, countercurrently, or a combination thereof, using various means well known in the art to increase the contact area between two fluid streams in liquid/liquid extraction process such as mechanical agitators including turbo-mixers, rotating disc contactors, and centrifugal contactors, shed rows, liquid/liquid contacting trays, orifices of reduced diameter, packed beds, static mixers, etc. The process can be operated continuously or as a batch process and could be operated in a multiple number of contacting stages cocurrently or countercurrently. During contacting of the fluid streams, the D2EHPA/TOPO extracts the uranyl cations from the WPPA and transfers them through the exterior phase of the emulsion to the interior phase wherein the phosphoric acid strips the uranium from the D2EHPA/TOPO and the stripped uranium is reduced, by the ferrous ions, to the +4 valence state as U(IV) cations which complex with the alkane diphosphonic acid complexing agent, thereby trapping the uranous cations in the emulsion since the D2EHPA/TOPO will not effectively re-extract the complexed U(IV) cations from the interior phase and transfer them back through the exterior phase. As a consequence, the process of this invention is not concentration equilibrium limited with respect to the interaction between the D2EHPA/TOPO containing oil and the WPPA as are the commercial processes disclosed in the art.

After the extraction step, the uranium is recovered by breaking the emulsion and then recovering the uranium from the internal aqueous phase by conventional techniques known to those skilled in the art. The spent emulsion can be broken using various techniques such as

BAD ORIGINAL

electric coalescence, adding emulsion-breaking solvents, heating, a combination of centrifugation and mechanical shear, etc.

The invention will be more readily understood by reference to the working examples set forth below.

EXAMPLES

Example 1

In this example, uranium was removed from a WPPA feed by contacting the feed with the liquid membrane emulsion in a batch extraction apparatus comprising a two liter capacity resin kettle having an inside diameter of 10 centimeters fitted with four 1 cm vertical baffles and four evenly spaced marine propellers of a diameter of 5.1 cm. The wet process phosphoric acid or WPPA was obtained from a central Florida acid producer and contained 30 wt. % $P_2O_5$ (approximately 5.5M) and from about 1-2 wt. % solids as hydrated calcium sulfate. The WPPA was filtered through a 1 m cartridge filter to remove the solid gypsum and organic solid matter. 1500 ml of the WPPA was then added to the resin kettle and heated to a temperature of 60°C. The WPPA feed contained 130 mg per gram of feed as uranyl ion. The liquid membrane emulsion had the following composition: Exterior Phase = 2.9 wt. % D2EHPA, 0.88 wt. % TOPO, 3 wt. % of a PIBSA-polyamine surfactant of the type disclosed in U.S. 3,172,892 made by reacting 1.3 moles of PIBSA of a molecular weight of 1,000 with 1 mole of tetraethylene pentamine with the balance being Low Odor Paraffin Solvent: Interior Phase = a solution of 6M $H_3PO_4$ containing 30g per liter of ferrous ion, and in one case 0.2M of EHDP. The Low Odor Paraffinic Solvent (LOPS) is a distillate fraction having a 66°C flash point, contains less than 3% aromatics and is also available from Exxon Chemical Company, U.S.A. The liquid membrane emulsion was prepared in a Waring blender at 13,000 rpm for 4 minutes using 333 mL of exterior phase or liquid membrane and 167 ml of the interior, aqueous phase, resulting in a volume ratio of exterior to interior phase of 2/1. 125mL of this emulsion

BAD ORIGINAL

was added to the resin kettle to give a volume ratio of feed/emulsion of 12/1. The emulsion was dispersed in the WPPA feed at 60°C by mixing at 600 rpm which produced globules of emulsion suspended therein having a droplet size of about 1-3 mm. Samples of the dispersion were taken through a stopcock in the bottom of the resin kettle as time progressed. These samples were allowed to separate and both the WPPA phase and emulsion phase were then analyzed for uranium content. Uranium analyses were done using either X-ray fluorescence spectroscopy or by inductively coupled ion plasma emission spectroscopy using a Jerrel-Ash Mark III instrument. The results of this experiment are summarized in Table I. These data clearly show that substantially greater extraction of uranium from the WPPA feed was achieved when the interior phase of the emulsion contained the EHDP complexing agent.

TABLE I

| EHDP in Internal Phase Molarity | Uranium Extraction %, at Various Contact Times, min. | | | | U(IV) Concentration In Internal Phase g/L |
|---|---|---|---|---|---|
| | 5 | 10 | 20 | 60 | |
| 0 | 43 | 56 | 69 | 73 | 4.5 |
| 0.2 | 62 | 78 | 88 | 88 | 5.5 |

Example 2

More related to commercial practices, extractions were carried out in a continuous contacting system comprising one extraction stage, single compartment contactor. Pretreated WPPA as described in next paragraph and freshly prepared LM emulsion as in Example 1, were fed into the contactor wherein a dispersion of LM emulsion in the continuous WPPA phase was formed by the shear of the stirrer contained in the contactor. The resultant dispersion overflowed after contacting into a settler to allow disengagement and separation of the loaded LM emulsion from the WPPA raffinate phase.

The WPPA was first oxidized in polyethylene

lined 55 gal. drums with hydrogen peroxide to ensure that all of the uranium was in the hexavalent form and then pumped through a 1 m polypropylene cartridge in-line filter to a 3 L vessel. This vessel was a preheater which increased the temperature of the pretreated WPPA to 60-70°C. The acid was then fed via a peristaltic pump (all fluids were transferred with peristaltic pumps) to the continuous contacting system described above.

The WPPA contained 130 g/g of uranium as uranyl ion. The composition of the LM emulsion was identical to that in Example 1. The feed to emulsion ratio was 12 with a contact time of 22 min., mixing rate of 600 rpm and an extraction temperature of 60°C. The data in Table II show a pronounced increase in extraction efficiency for the system with EHDP in the internal phase of the LM emulsion with a consequently higher loading of the internal phase with uranium as U(IV) ion. The extraction efficiency with EHDP was 65% vs 50% without EHDP in the internal phase and the loading was 4.1 g/L vs 3.1 g/L without EHDP.

TABLE II

EFFECT OF EHDP ON CONTINUOUS LM URANIUM EXTRACTION

| EHDP in Internal Phase, Molarity | Uranium Extraction % | Uranium Concentration in Internal Phase g/L |
|---|---|---|
| 0 | 50 | 3.1 |
| 0.2 | 65 | 4.1 |

Example 3

A similar experiment was carried out under conditions similar to those in Example 2 which again showed increased extraction efficiency when EHDP was present in the interior phase of the LM emulsion. The contactor in this example was divided vertically into three compart-

BAD ORIGINAL

ments of equal volume, the contact time was increased to 40 min. and the temperature was raised to 70°C. Again, the LM emulsion with EHDP in the internal phase outperformed that without EHDP as shown by the data in Table III.

TABLE III

| EHDP in Internal Phase Molarity | Uranium Concentration in Raffinate, g/g | Uranium Extraction % |
|---|---|---|
| 0 | 36 | 73 |
| 0.2 | 10 | 92 |

CLAIMS:

1. A process for recovering uranium from an aqueous feed solution containing uranyl cations comprising

(a) contacting said feed with a water-in-oil emulsion comprising (i) an aqueous interior phase containing a uranium complexing agent comprising an alkane diphosphonic acid dispersed in (ii) an oily, surfactant-containing exterior phase immiscible with both the interior phase and said feed, said interior phase also containing an acid solution and a reducing agent and said exterior phase containing at least one transfer agent to transport only the uranyl cations from said feed into the interior phase of the emulsion wherein said reducing agent changes the uranyl cations to U(IV) cations which form a complex with said complexing agent whereby said uranium is trapped in said interior phase to form a uranium-rich emulsion and a uranium-reduced feed solution;

(b) separating the uranium-rich emulsion from the feed solution; and

(c) recovering uranium from the emulsion.

2. A process according to claim 1 wherein said alkane diphosphonic acid has the formula

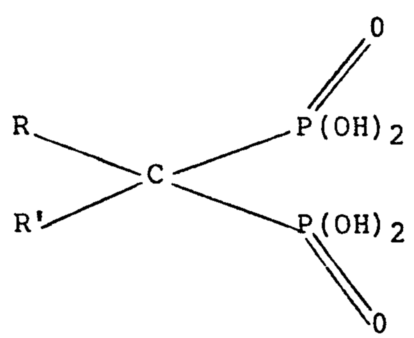

wherein R is a 1 to 4 carbon atom alkane and R' is hydrogen or hydroxyl.

3. A process according to either of claims 1 and 2 wherein said interior phase comprises from about 15 to 80 volume percent of said emulsion.

4. A process according to any one of the preceding claims wherein said transfer agent comprises a mixture of D2EHPA and TOPO.

5. A process according to any one of the preceding claims wherein the amount of complexing agent present in said interior phase ranges from about 0.1 - 1.0M.

6. A process according to any one of the preceding claims wherein said complexing agent comprises EHDP.

7. A process according to any one of the preceding claims wherein the concentration of phosphoric acid in said internal phase is about the same as that in the WPPA.

8. A process according to any one of the preceding claims wherein the surfactant in the external phase comprises polyamine derivative of PIBSA.

9. Uranium whenever recovered from an aqueous feed solution containing uranyl cations by the process claimed in any one of the preceding claims.

BAD ORIGINAL